Europäisches Patentamt

European Patent Office

Office européen des brevets

(11) Publication number: **0 503 782 A1**

## EUROPEAN PATENT APPLICATION

(21) Application number: **92301411.2**

(22) Date of filing: **20.02.92**

(51) Int. Cl.5: **G06K 19/06**, B42D 15/10, B29C 45/14

(30) Priority: **15.03.91 GB 9105497**

(43) Date of publication of application:
**16.09.92 Bulletin 92/38**

(84) Designated Contracting States:
**AT BE CH DE DK ES FR GB GR IT LI LU MC NL PT SE**

(71) Applicant: **GEC AVERY LIMITED**
**Smethwick**
**Warley, West Midlands, B66 2LP(GB)**

(72) Inventor: **Jarvis, Charles Richard**
**12 Acacia Drive**
**Bewdley, Worcestershire(GB)**

(74) Representative: **Elliott, Frank Edward et al**
**GEC Patent Department (Chelmsford Office)**
**GEC-Marconi Research Centre West**
**Hanningfield Road**
**Great Baddow Chelmsford Essex CM2 8HN(GB)**

(54) Integrated circuit card.

(57) An integrated circuit card has a circuit bearing insert (1) therein with the electrical components (3 and 4) such as memory, processing circuit and capacitors mounted within dished portions of the substrate. This is typically achieved by heating the insert under pressure and elevated temperature with its reverse side against a resiliently-deformable pad.

EP 0 503 782 A1

Rank Xerox (UK) Business Services

This invention relates to the manufacture of an integrated circuit card, of the type which can store and/or process data when in communication with the reader unit. An example of such a card is that described in GB-A-2173623.

For many applications, an integrated circuit card of the type defined is required to be thin and capable of flexing. For example, where the card serves as a credit or cash card or the like, there are internationally agreed standards as to the thickness and flexibility to permit the card to be accepted by automatic card handling machinery such as cash dispensing machines. In such machines, the cards may be caused to flex as part of the authentication procedure.

Cards manufactured in accordance with GB-A-2173623 typically comprise an insert bearing the electrical components and bonded within the polymeric body of the card. The insert consists of a thin (typically 25 micrometres) polyester substrate upon which conductive tracks forming the electrical connections and the signalling coil are formed. Processing and/or storage components, as well as capacitors, are mounted onto the substrate by adhesive and electrically connected to the conductive tracks. A problem which can arise in certain circumstances is that the flexing of the card, and within it the insert, may cause peeling of the components from the substrate, with consequent risk of fracture of one or more of the electrical connections.

It has now been found that deforming the substrate so that a generally concave area is formed in the substrate at the location of each component substantially reduces the incidence of peeling with consequent risk of failure of the card.

Accordingly, one aspect of the present invention provides an integrated circuit card containing a flexible insert consisting of a flexible circuit-forming substrate upon which is adhered at least one electrical component, the substrate being generally planar and the or each electrical component being mounted within a generally concave portion of the substrate.

Preferably, the surface of each component opposite to that adhered to the substrate lies in substantially the same plane as the remainder of the substrate.

According to another aspect of the invention, there is provided a method of manufacturing an integrated circuit card, comprising forming a flexible insert by adhesively mounting at least one electrical component on a flexible circuit-forming polymeric substrate, the substrate being deformed to provide for the or each electrical component a generally concave portion in which said component is mounted, and mounting the insert within a polymeric body to form the card.

Preferably, the concave portion or portions are formed by placing the insert against a non-deformable surface with the or each component in contact with the surface, and with a resiliently-deformable surface in contact with the opposite face of the insert, applying pressure to the insert while heating the substrate to a temperature above the glass transition temperature thereof, maintaining the insert at the elevated temperature for a predetermined period and then cooling the insert to below the glass transition temperature while maintaining the pressure, and removing the insert from between the two surfaces.

Alternatively, the substrate may be deformed, for example by pressing with a heated die, before the electrical or electronic components are mounted in the concave portions so formed. This approach facilitates the application of the polymeric coating for components known as the "glob top", which seals the components and protects their connections to the circuit on the substrate.

The resiliently-deformable surface may, for example, be formed of silicone foam. The pressure is suitably of the order of 50 psi, and the predetermined period of time may be, for example, 10 seconds.

For a typical polyester substrate, the insert is heated to a temperature of about 150°C.

Reference is made to the drawings, in which:

Figure 1 is an enlarged sectional view (not to scale) of an integrated circuit card in accordance with the prior art, showing the effect on the insert of flexure of the card;

Figures 2 and 3 are sectional views illustrating successive steps in the manufacture of an insert for a card in accordance with the present invention;

Figure 4 is a view corresponding to that of Figure 1 of an integrated circuit card in accordance with the present invention illustrating the reduced effect of flexure of the card; and

Figures 5, 6 and 7 are sectional views illustrating stages in an alternative method according to the invention.

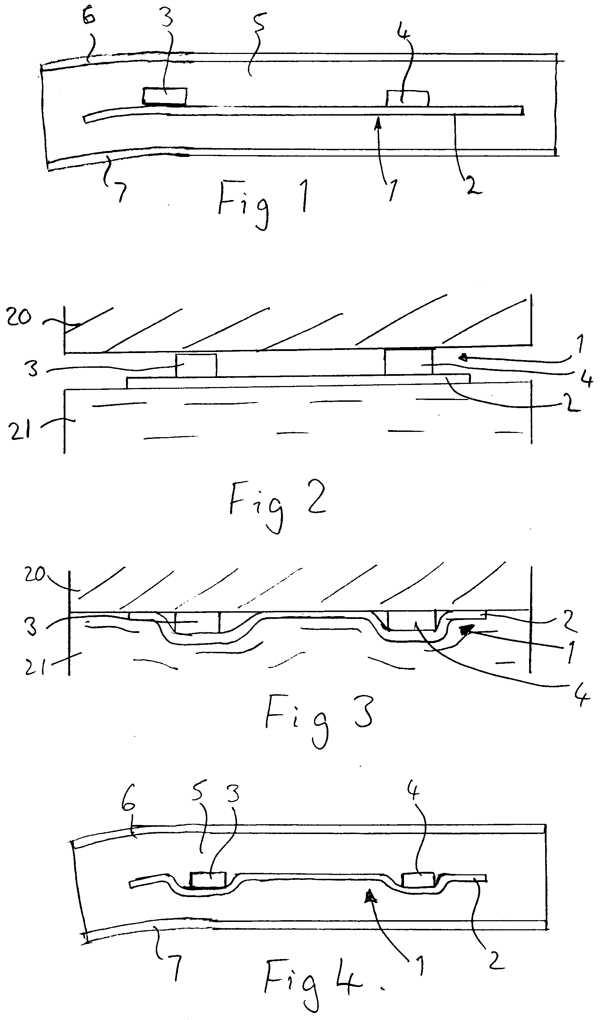

Referring first to Figure 1, the integrated circuit card comprises an insert 1 consisting of a flexible substrate 2 upon which conductive tracks are formed defining circuit connections and the coil used for communication with an external reader in accordance with GB-A-2173623. Electronic components 3 and 4, for example integrated circuits and capacitors, are mounted on the surface of the substrate 2. The insert 1 is then mounted within a card structure, for example by the process described in GB-A-2219960, so that the insert is held within a body 5 of cured resin sandwiched between outer high tensile skins 6 and 7 which may carry printed designs and information, and, if desired, magnetic stripes encoding additional information for use of the card as a conventional cash card or credit card.

When the card is flexed, as illustrated in exaggerated form in the left hand portion of Figure 1, the substrate 2 of the insert 1 also tends to flex with the card, and in some circumstances this can lead to a tendency for the rigid electronic component 3 adhered thereto to peel away from the substrate 2.

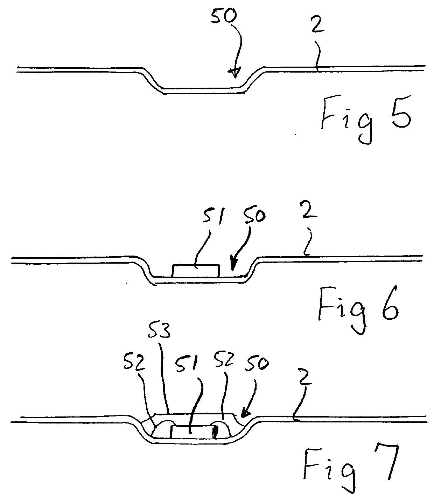

Figures 2 and 3 are again not to scale but illustrate the principle by which the insert may be processed to form an integrated circuit card in accordance with one embodiment of the present invention. The completed insert 1 is positioned with the components 3 and 4 in contact with a stainless steel plate 20 and with the opposite face of the substrate 2 against a resilient expanded silicone rubber block 21. The plate 20 is heated to a temperature above the glass transition temperature for the substrate, for example about 150°C, and the plate 20 and the block 21 are pressed together with a pressure of about 50 psi. After about 10 seconds, the plate 20 is allowed to cool, and when the insert has cooled to below the glass transition temperature for the substrate, the pressure is then released and the insert removed. Figure 3 shows the condition during compression. The resulting insert has its substrate generally planar but with slight depressions at the location of each of the components 3 and 4 such that the surface of the component opposite that which is attached to the substrate lies in substantially the same plane as the surface of the substrate itself.

Figure 4 shows such a substrate when incorporated into an integrated circuit card. Again, the card is flexed in a similar manner to that of Figure 1, the amount of flexure illustrated being exaggerated. Owing to the deformation of the substrate 2 around the component 3, flexure of the substrate 2 takes place in the area of deformation and not in the portion underlying the component 3. Thus, there is no tendency for the substrate 2 to peel away from the component 3.

In an alternative method, the substrate 2 is initially deformed by means of, for example, a suitably-shaped heated metal die to provide a concave portion 50 as shown in Figure 5. As with the previously-described method, the polymeric substrate may be briefly heated to a temperature above its glass transition temperature, while applying pressure, the pressure being released after cooling. The electrical components, e.g. an integrated circuit 51, are then mounted in their respective concave portions 50 using adhesive, as is conventional. This stage is illustrated in Figure 6. Electrical connections 52 are then made between the component 51 and the substrate 2, and finally the polymeric, typically epoxy resin, "glob top" material 53 is introduced into the concave portion, pressed flat using a non-adhering release sheet, and cured to provide the structure illustrated in Figure 7.

**Claims**

1. An integrated circuit card containing a flexible insert consisting of a flexible circuit-forming substrate (2) upon which is adhered at least one electrical component (3, 4), the substrate being generally planar, characterised in that the or each electrical component (3, 4) is mounted within a generally concave portion of the substrate (2).

2. An integrated circuit card according to Claim 1, wherein the surface of the or each component opposite to that adhered to the substrate is in substantially the same plane as the remainder of the substrate.

3. A method of manufacturing an integrated circuit card, comprising forming a flexible insert by adhesively mounting at least one electrical component (3, 4) on a flexible circuit-forming polymeric substrate (2), characterised by deforming the substrate to provide for the or each electrical component (3, 4) a generally concave portion (50) in which said component is mounted, and mounting the insert within a polymeric body (5) to form the card.

4. A method according to Claim 3, comprising placing the insert against a non-deformable surface (20) with the or each component (3, 4) in contact with the surface, and with a resiliently-deformable surface (21) in contact with the opposite face of the insert, applying pressure to the insert while heating the substrate (2) to a temperature above the glass transition temperature thereof, maintaining the insert at the elevated temperature for a predetermined period and then cooling the insert to below the glass transition temperature while maintaining the pressure, and removing the insert from between the two surfaces.

5. A method according to Claim 3, comprising deforming the substrate to form a concave portion (50) therein for the or each electrical component (3, 4), and then mounting the electrical component or components in the concave portion or portions.

6. A method according to Claim 4, wherein the resiliently-deformable surface (21) is formed of a silicone foam.

7. A method according to Claim 4 or 6, wherein the pressure is of the order of 50 psi.

8. A method according to Claim 4, 6 or 7, wherein the predetermined period is 10 seconds.

Fig 1

Fig 2

Fig 3

Fig 4.

Fig 5

Fig 6

Fig 7

## DOCUMENTS CONSIDERED TO BE RELEVANT

EP 92301411.2

| Category | Citation of document with indication, where appropriate, of relevant passages | Relevant to claim | CLASSIFICATION OF THE APPLICATION (Int. Cl. 5) |
|---|---|---|---|
| X | EP – A – 0 140 230 (GAO) * Totality * | 1,3,5 | G 06 K 19/06 B 42 D 15/10 B 29 C 45/14 |
| A | DE – A – 3 901 402 (TELENORMA) * Totality * | 1,3,4,5 | |
| A | EP – A – 0 107 061 (PHILIPS) * Claim 1; fig. 1 * | 1,3,4,5 | |
| A | DE – A – 3 528 686 (R. OLDENBOURG) * Claims 1-11; fig. 2,3 * | 1,3,4,5 | |
| A | EP – A – 0 209 791 (CASIO) * Claims 1-5; fig. 1-9 * | 1,3,4,5 | |
| A | GB – A – 2 219 960 (W & T) * Claim 1 * | 1 | TECHNICAL FIELDS SEARCHED (Int. Cl.5) |
| A | GB – A – 2 227 209 (W & T) * Claim 1 * | 1 | G 06 K B 42 D B 29 C |

The present search report has been drawn up for all claims

| Place of search | Date of completion of the search | Examiner |
|---|---|---|
| VIENNA | 17-06-1992 | MIHATSEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)